(19) **Europäisches Patentamt**
**European Patent Office**
**Office européen des brevets**

(11) **EP 3 737 155 A1**

(12) **EUROPEAN PATENT APPLICATION**

(43) Date of publication:
**11.11.2020 Bulletin 2020/46**

(51) Int Cl.:
**H04W 36/04** *(2009.01)* **H04W 92/20** *(2009.01)*

(21) Application number: **20183859.6**

(22) Date of filing: **02.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2010 US 37000610 P**
**12.08.2010 US 37321310 P**
**29.07.2011 US 201113194339**

(62) Document number(s) of the earlier application(s) in accordance with Art. 76 EPC:
**11814821.2 / 2 601 806**

(71) Applicant: **Samsung Electronics Co., Ltd.**
**Gyeonggi-do 16677 (KR)**

(72) Inventors:
• **Miao, Guowang**
**Plano, Texas 75074 (US)**
• **Zhang, Jianzhong**
**Plano, Texas 75093 (US)**

• **Li, Ying**
**Garland, Texas 75044 (US)**
• **Jeong, Kyeong-In**
**Suwon-si (KR)**
• **Nam, Young-Han**
**Richardson, Texas 75080 (US)**
• **Liu, Lingjia**
**Allen, Texas 75013 (US)**
• **Ng, Boon-Loong**
**Richardson, Texas 75082 (US)**

(74) Representative: **Nederlandsch Octrooibureau**
**P.O. Box 29720**
**2502 LS The Hague (NL)**

Remarks:
This application was filed on 03-07-2020 as a divisional application to the application mentioned under INID code 62.

(54) **APPARATUS AND METHOD FOR SUPPORTING RANGE EXPANSION IN A WIRELESS NETWORK**

(57) Methods for operating a user equipment and a base station in a wireless communication system, and apparatus thereof are provided. The method comprises receiving, from a first base station, a measurement configuration, transmitting, to the first base station, a measurement report according to the measurement configuration, receiving, from a first base station, a RRC reconfiguration message triggering a handover to a second base station, wherein the RRC reconfiguration message includes access information required to access the second base station, performing a synchronization to the second base station, transmitting, to the second base station, a RRC reconfiguration complete message to confirm a completion of the handover, monitoring a physical downlink control channel, PDCCH, from the second base station based on a number of symbols used for the PDCCH of the second base station, wherein the RRC reconfiguration message includes the number of symbols used for the PDCCH of the second base station.

[Fig. 2]

**Description**

**Technical Field**

The present application relates generally to wireless networks and, more specifically, to systems and methods for supporting range expansion of a micro-base station in the coverage area of a macro-base station in a wireless network.

**Background Art**

The following documents and standards descriptions are hereby incorporated into the present disclosure as if fully set forth herein: i) REF1 - REV-080052, "LTE-Advanced System Requirements", Qualcomm Europe; ii) REF2 - Document No. R1-082556, "New Interference Scenarios in LTE-Advanced", Qualcomm Europe; iii) REF3 - Document No. R1-083807, "Text Proposal For Evaluation Methodology", Ericsson, Motorola, Nokia, Nokia Siemens Networks, Qualcomm Europe, Samsung; iv) REF4 - Document No. R1-104036, "Investigation On CRS Interference To Downlink Control Channel", NTT DOCOMO; and v) REF5 - 3GPP Technical Specification No. 36.304, "Evolved Universal Terrestrial Radio Access (E-UTRA); User Equipment (MS) Procedures In Idle Mode"

To meet the performance requirements set forth for LTE-A in "LTE-Advanced System Requirements" (REF1 above), the wireless systems may incorporate new, small-area base stations (or nodes) that transmit at lower power compared to a conventional, wide-area base station (or macro-base station, macro-eNodeB, macro-eNB). The small area base station may be referred to by different names, including micro-base station (micro-cell), pico-base station (pico-cell), femto-base station (femto-cell), home eNodeB (home eNB). For the purpose of simplicity, the small area base station will generally be referred to as a micro-base station (or micro-BS) in this disclosure and the wide-area base station will generally be referred to as a macro-base station (or macro-BS) in this disclosure. Also, the user-operated wireless devices (e.g., cell phones) that access the micro-base stations and macro-base stations will generally be referred to as mobile stations in this disclosure. However, those skilled in the art will recognize that in other types of wireless systems, a mobile station may often be referred to be other names, including subscriber station (SS), remote terminal (RT), user equipment (MS), and the like.

The use of a micro-base station changes the topology of the system to a more heterogeneous network, with a different interference environment in which nodes of multiple classes compete for the same wireless resources. Some of the interference conditions that arise in such a network were described in "New Interference Scenarios in LTE-Advanced" (REF2 above). By way of example, if one or more micro-base stations (micro-BSs) operate in the coverage area of a macro-BS, in most conventional systems (e.g., LTE Release 8), the mobile station would connect to the base station with the highest downlink (DL) received power. Since there is a large difference in the transmit powers of a macro-BS and a micro-BS (e.g., 16dB for 10 MHz system bandwidths), the coverage area of a micro-BS turns out to be much smaller than the coverage area of the macro-BS under this criterion.

Additionally, a large number of new cell-edges areas are created with the introduction of micro-BSs, because mobile stations that normally are in the same cell - and hence orthogonal to each other - now use the same resources and interfere with each other. The resulting SNR degradation is compensated to some extent by the increase in bandwidth caused by the introduction of new nodes. However, this increased bandwidth can be used by only a small fraction of mobile stations which fall within the small coverage region of the micro-BSs.

Furthermore, from an uplink (UL) point of view, the optimal serving cell (BS) choice is determined by the lowest path loss, rather than the highest downlink (DL) received power. The micro-BS coverage area would be much larger under this criterion and might even be comparable to the macro-BS coverage area. Thus, the presence of base station with different transmit powers creates a large degree of imbalance between the downlink and uplink coverage regions.

An alternative approach is to serve the mobile station (MS) from the cell to which the MS has the lowest path loss. This significantly expands the coverage area of the micro-BS and greatly reduces uplink interference in the system. This leads to a substantial improvement in uplink performance and inter-user fairness. Moreover, such a cell-selection rule achieves cell-splitting gains when multiple micro-BSs are deployed in the coverage region of a macro-BS. In particular, many micro-BSs may simultaneously serve different MSs on the same resources in the absence of interference from the high-power macro-BS. Moreover, these micro-BSs may potentially cover most of the cell in the absence of interference from the macro-BS. This scheme is referred to as "range expansion", since it expands the coverage region of low-power micro-BSs. More generally, range expansion ("RE") refers to a cell-selection strategy that takes interference efficiency into account. As described above, range expansion can provide significant benefits in a network containing base stations with varying transmit powers.

Range expansion implies that a MS does not always connect to the base station with the strongest downlink received power. In particular, as described in REF2 above, while a MS may have lower path loss to its serving micro-BS than to a macro-BS, the received power of the micro-BS may be significantly lower than that of the macro-BS (up to 16dB lower). In other words, the MS would have to operate at a very low, interference-dominated geometry (up to -16dB) for its serving cell. New techniques may need to be introduced in order to operate efficiently in such an environment, including: i) deep penetration synchronization signals; ii) knowledge of transmit power for serving cell selection; iii) deep penetration control channels; and iv) interference coordination techniques

Deep penetration synchronization signals - The current LTE acquisition structure (i.e., structure of PSC, SSC and PBCH) enables detection only for geometries seen in traditional macro-cellular operating environments. As discussed above, geometries seen in a range expansion (RE) environment will be substantially lower and may therefore necessitate a new acquisition design.

Knowledge of transmit power for serving cell selection - An important aspect mentioned above is that serving cell selection based on path-loss can provide superior performance to serving cell selection based on downlink received power, in the case of heterogeneous networks. In order to achieve this, the entity which determines the serving cell for handover (HO) or initial access (either the base station or the MS) may be aware of the transmit power of both base stations. A mechanism is needed to communicate transmit powers to neighboring base stations and/or MSs.

Deep penetration control channels - In addition to the acquisition signals, a mechanism is needed to communicate other control channels (such as PDCCH and PHICH on the DL and PUCCH on the UL) in low geometry environments.

Interference coordination techniques - The benefits of range expansion were described under the assumption that there was no interference from the macro-BS while the micro-BS was serving a MS in its expanded coverage. Thus, techniques are needed to reduce macro-BS power (or blank the resource entirely) on the resources used to serve mobile stations in an expanded micro-base station coverage region. Note that without such coordination, it may be completely impossible for the micro-base station to serve any data to mobile stations in its expanded range, since the SINR of the mobile stations, taking macro-BS interference into account, is extremely low. The choice and number of resources on which macro-BS transmit power is reduced may be determined based on factors such as the number of micro-base stations in macro coverage, number of users being served by the micro- and macro-base stations, QoS and buffer status of these users, and fairness among different users in the network (potentially across base stations). Different time-scales for interference coordination can be considered, ranging from per-subframe interference coordination to coordination on the time scale of hundreds of milliseconds. Per-subframe interference coordination may yield additional benefits by taking buffer status of different mobile stations into account, in addition to the factors mentioned above. Interference coordination on a slower time-scale may not take buffer status into account, but may enable easier implementation.

A mobile station (MS) that supports range expansion (RE), hereinafter referred to as "RE-MS", may experience significantly low geometry (-16dB) at the cell edge of low-power nodes and may not be able to decode the Physical Control Format Indicator Channel (PCFICH). In a heterogeneous network deployment in which macro-cells and micro-cells use a single component carrier, the RE-MS may receive a high level of interference from the macro-cell. In such a scenario, a simple way to achieve interference coordination between the macro- and micro-base stations is for the macro-BS to mute the non-CRS region of its subframe to allow the micro-BS to transmit with reduced interference. This would reduce the macro-to-micro interference in the control region as well as the data region. However, the interference from the common reference signal (CRS) portions of the macro-cell still remains.

In the control region of the micro-cell, the PCFICH is most affected by the interference from the macro-CRS, since the PCFICH is mapped only at the first OFDM symbol. It is assumed that the macro-cells and micro-cells are frame synchronized. The Physical Downlink Control Channel (PDCCH) may be extended to 3 OFDM symbols, and thus the effect of interference from the macro-CRS may be mitigated to some extent. REF4 above indicates that in this particular scenario, the degradation in the PDCCH performance may be suppressed to an acceptable level, although the degradation in the PCFICH performance becomes prohibitive.

Table 1

[Table 1]

| Subframe | Number of OFDM symbols for PDCCH when $N_{RB}^{DL} > 10$ | Number of OFDM symbols for PDCCH when $N_{RB}^{DL} \leq 10$ |
|---|---|---|
| Subframe 1 and 6 for frame structure type 2 | 1,2 | 2 |
| MBSFN subframes on a carrier supporting both PMCH and PDSCH for 1 or 2 cell-specificc antenna ports | 1,2 | 2 |

(continued)

| Subframe | Number of OFDM symbols for PDCCH when $N_{RB}^{DL} > 10$ | Number of OFDM symbols for PDCCH when $N_{RB}^{DL} \leq 10$ |
|---|---|---|
| MBSFN subframes on a carrier supporting both PMCH and PDSCH for 4 cell-specific antenna ports | 2 | 2 |
| MBSFN subframes on a carrier not supporting PDSCH | 0 | 0 |
| Non-MBSFN subframes (except subframe 6 for frame structure type 2) configured with positioning reference signals | 1,2,3 | 2,3 |
| All other cases | 1,2,3 | 2,3,4 |

The physical control format indicator channel (PCFICH) carries information about the number of OFDM symbols used for transmission of PDCCHs in a subframe. The set of OFDM symbols possible to use for PDCCH in a subframe is given in TABLE 1. The PCFICH is transmitted when the number of OFDM symbols for PDCCH is greater than zero. The correct reception of PCFICH is crucial for decoding PDCCH and, thus, for downlink communications. However, as indicated above, with range expansion, where a RE-MS is allowed to be attached to a low-power node while experiencing significantly low geometry (-16dB), the RE-MS may not able to decode the PCFICH of the low-power node (i.e., the micro-BS).

Therefore, there is a need in the art for improved techniques for communicating the PCFICH value to a mobile station when a micro-BS operates in range expansion (RE).

Furthermore, the network may comprise mobile stations that may or may not support range expansion. In the cell reselection process, according to the existing cell reselection rule, all mobile stations in a range expansion area select the macro-base station (BS) to access and communicate with. However, in a range expansion area, mobile stations that support range expansion should select micro-BSs while other mobile stations that do not support range expansion should select macro-BSs. Therefore, there is a need to improve the cell reselection rule to support range expansion.

## Disclosure of Invention

## Solution to Problem

To address the above-discussed deficiencies of the prior art, it is a primary object to provide a wireless network for communicating with a mobile station capable of operating in a range expansion mode. In an advantageous embodiment, the wireless network comprises a macro-base station (BS) operable to communicate with the mobile station and a micro-base station (BS) in a coverage area associated with the macro-BS. The macro-BS transmits to the micro-BS a first control message indicating a range expansion (RE) capability of the mobile station and, in response, the micro-BS transmits to the macro-BS PCFICH information associated with the micro-BS. The macro-BS is further operable to transmit the PCFICH information to the mobile station, wherein the mobile station uses the PCFICH information to perform a handover procedure to the micro-BS.

It is another object to provide, for use in a wireless network, a mobile station capable of operating in a range expansion mode. The mobile station communicates with a macro-base station (BS) of the wireless network and receives from the macro-BS PCFICH information associated with a micro-base station (BS) in a coverage area associated with the macro-BS. The mobile station uses the PCFICH information to perform a handover procedure to the micro-BS.

The PCFICH information includes a PCFICH value transmitted by the micro-BS and a minimum time period during which the PCFICH value is static.

It is another primary object to provide a wireless network for communicating with a mobile station capable of operating in a range expansion mode, the wireless network comprising a serving base station operable to communicate with the mobile station and neighboring base stations operable to communicate with the mobile station. The serving base station transmits to the mobile station in a broadcast message at least one cell reselection parameter, QREoffset, that specifies a bias value associated with a plurality of the neighboring base stations that support range expansion. The mobile station uses the at least one cell reselection parameter to select one of the plurality of neighboring base stations for a handover procedure.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**Brief Description of Drawings**

For a more complete understanding of the present disclosure and its advantages, reference is now made to the following description taken in conjunction with the accompanying drawings, in which like reference numerals represent like parts:

FIGURE 1 illustrates a wireless network in which a micro-base station operates in the coverage area of a macro-base station according to an exemplary embodiment of the disclosure;
FIGURE 2 is a message flow diagram illustrating a handover procedure that supports PCFICH communication in range expansion mode according to an exemplary embodiment of the disclosure; and
FIGURE 3 is a message flow diagram illustrating a handover procedure that supports PCFICH communication in range expansion mode using master information broadcasting (MIB) according to an exemplary embodiment of the disclosure.

**Best Mode for Carrying out the Invention**

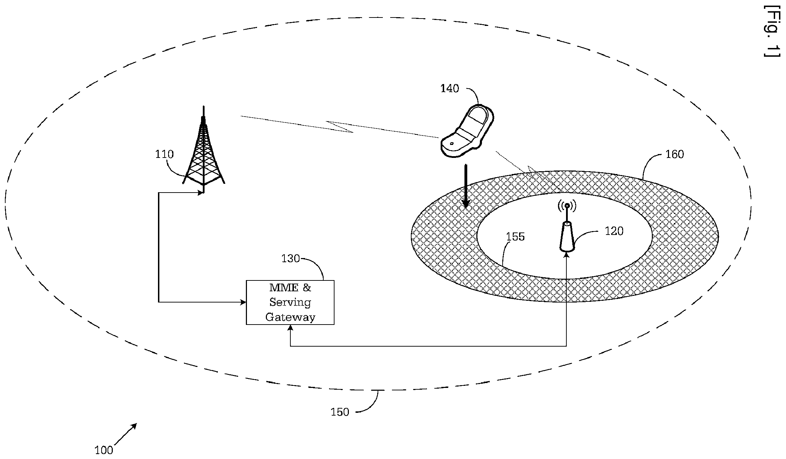

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

FIGURE 1 illustrates wireless network 100 in which a micro-base station operates in the coverage area of a macro-base station according to an exemplary embodiment of the disclosure. Wireless network 100 comprises macro-base station 110, micro-base station 120, and MME & serving gateway 130. Macro-BS 110 and micro-BS 120 both communicate via the same MME & serving gateway 130. Coverage area 150 of macro-BS 110 is indicated by a dotted line oval. Coverage area 155 of micro-BS 120 is indicated by a sold line oval.

Mobile station (MS) 140 operates in coverage area 150 and is operable to communicate with macro-BS 110. MS 140 is also near coverage area 155 of micro-BS 120. According to the principles of the present disclosure, MS 140 is capable of operating in a range expansion (RE) mode that enables MS 140 to communicate with micro-BS 120 in coverage area 160, indicated by a solid line oval, which is larger than coverage area 155. The ring-shaped, shaded area between the outer edge of coverage area 155 and the outer edge of coverage area 160 is the range expansion (RE) area.

In FIGURE 1, MS 140 is located just beyond the cell edge of micro-BS 120 (i.e., just beyond coverage area 155) and is not able to detect the PCFICH of micro-BS 120 due to the high interference from macro-BS 110. According to the principles of the present disclosure, techniques are provided that can effectively deliver the PCFICH value of micro-BS 120 to range expansion-capable mobile stations (i.e., RE-MSs) near micro-BS 120 when micro-BS 120 keeps the PCFICH semi-static. Specifically, the present disclosure describes the use of Handover (HO) signaling or broadcast channels to transmit the PCFICH of micro-BS 120 from micro-BS 120 to RE-MSs (e.g., MS 140). The present disclosure also describes cell reselection methods that differentiate the selection results of range expansion (RE)-capable mobile stations from those of range expansion (RE) non-capable mobile stations in the cell reselection process.

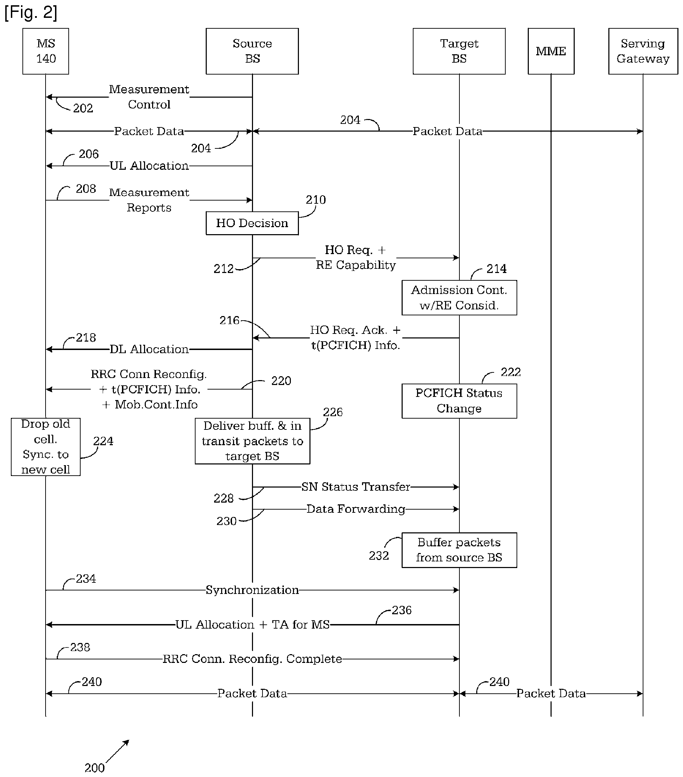

FIGURE 2 depicts message flow diagram 200, which illustrates a handover procedure that supports PCFICH communication in range expansion mode according to an exemplary embodiment of the disclosure.

In FIGURE 2, handover (HO) signaling is used to transmit a PCFICH value of the micro-cell (i.e., micro-BS 120), denoted by t(PCFICH), when RE-MS 140 is in the process of handover to micro-BS 120 from macro-BS 110. In FIGURE 2, the proposed handover scenario that supports t(PCFICH) communication assumes that neither MME nor the serving gateway changes (i.e., macro-BS 110 and micro-BS 120 operate from the same MME & serving gateway 130). The HO procedure is performed without EPC involvement. In other words, preparation messages are directly exchanged between macro-BS 110 and micro-BS 120. The release of the resources at the source side (i.e., macro-BS 110) during the HO completion phase is triggered by macro-BS 110.

In FIGURE 2, MS 140 is assumed to be in communication with the MME and the Serving Gateway via a Source base station (BS), such as, for example, macro-BS 110. The Source BS transmits measurement control message 202 to MS 140 to configure the measurement procedures of MS 140 according to area restriction information. Measurements provided by the Source BS may assist the function controlling the connection mobility of the mobile station (MS) 140. Once communication is established, MS 140 and the Source BS exchange packet data messages 204. The Source BS and the Serving Gateway also exchange packet data messages 204.

During routing communication, the Source BS transmits uplink allocation messages 206 to MS 140. According to the rules set by, for example, system information, specification, and the like MS 140 is triggered to send Measurement Reports 208 to the Source BS. In block 210, the Source BS makes decision based on the Measurement Report message 208 and RRM information to handover (or handoff) MS 140.

In response to this decision, the Source BS (i.e., macro-BS 110) transmits a Handover Request message 212 to the Target BS (i.e., micro-BS 120) and includes necessary information to prepare the HO at the Target BS. According to the principles of the present disclosure, it is proposed that the Handover Request message 212 further include the capability of the MS supporting range expansion (RE), denoted by "RE Capability".

In block 214, the Target BS may perform admission control procedure dependent on the received QoS information and the RE Capability of MS 140 in order to increase the likelihood of a successful HO, if the resources can be granted by the Target BS. The Target BS configures the required resources according to the received QoS information and reserves a C-RNTI and optionally a RACH preamble. The AS-configuration to be used in the target cell may be specified independently (i.e., an "establishment") or may be a "delta" compared to the AS-configuration used in the Source BS (i.e., a "reconfiguration").

Next, the Target BS prepares for a handover (HO) with L1/L2 and transmits Handover Request Acknowledgment message 216 to the Source BS. Handover Request Acknowledgment message 216 includes a data field to be sent to MS 140 as an RRC message to perform the handover. The date field includes a new C-RNTI, the Target BS security algorithm identifiers for the selected security algorithms, and may include a dedicated RACH preamble and possibly some other parameters (i.e., access parameters, SIBs, etc.). Handover Request Acknowledgment message 216 may also include RNL/TNL information for the forwarding tunnels, if necessary. Finally, according to the principles of the present disclosure, Handover Request Acknowledgment message 216 includes the t(PCFICH) information, which includes at least one of the t(PCFICH) value and the minimum time duration that the t(PCFICH) is kept the same.

After the Source BS receives Handover Request Acknowledgment message 216 (or after the transmission of the handover command is initiated in the downlink, data forwarding may be initiated. After Handover Request Acknowledgment message 216 is transmitted, the Target BS may fix the PCFICH to be the value carried in the t(PCFICH) information. If the minimum time duration is also included in the t(PCFICH) information, the Target BS keeps the PCFICH fixed for at least the minimum time duration. Therefore, according to the principles of the present disclosure, the Target BS starts a counter, CFItimer, to calculate how long the PCFICH has been kept static (block 222).

The Source BS transmits to MS 140 RRC Connection Reconfiguration message 220 to perform the handover. This message includes the Mobility Control Information and the t(PCFICH) information. The source BS performs the necessary integrity protection and ciphering of the message. MS 140 receives RRC Connection Reconfiguration message 220 with the necessary parameters (i.e., new C-RNTI, Target BS security algorithm identifiers and, optionally, a dedicated RACH preamble, target base station SIBs, etc.) and is commanded by the Source BS to perform the handover. MS 140 does not need to delay the handover execution for delivering the HARQ/ARQ responses to source base station. According to one embodiment of the present disclosure, RRC Connection Reconfiguration message 220 carries the t(PCFICH) information. According to another embodiment of the present disclosure, the Source BS may alternatively transmit the t(PCFICH) information in downlink (DL) allocation message 218.

During the handover procedure, MS 140 drops its connection to the Source BS and synchronizes to the Target BS (block 224). The Source BS transmits SN Status Transfer message 228 to the Target BS to convey the uplink PDCP SN receiver status and the downlink PDCP SN transmitter status of E-RABs for which PDCP status preservation applies. Also, during the handover procedure, the Source BS sends buffered and in transit packets to the Target BS (block 226 and Data Forwarding message 230). The Target BS buffers the packets from the Source BS (block 232).

MS 140 performs synchronization 234 to the Target BS and accesses the target cell via RACH, following a contention-free procedure if a dedicated RACH preamble was indicated in the Mobility Control Information or following a contention-based procedure if no dedicated preamble was indicated. MS 140 derives Target BS specific keys and configures the selected security algorithms to be used in the target cell. In response, the Target BS transmits UL allocation and timing advance (TA) information 236 to MS 140.

When MS 140 successfully accesses the Target BS, MS 140 transmits to the Target BS RRC Connection Reconfiguration Complete message 238 to confirm the handover, along with an uplink Buffer Status Report to indicate that the handover procedure is completed for MS 140. The Target BS verifies the C-RNTI sent in the RRC Connection Reconfiguration Complete message 238. The Target BS now begins to send and receive data packets 240w with MS 140.

It is noted that when the CFITimer counts down to zero, indicating that the t(PCFICH) can change, if MS 140 is still in the range expansion (RE) area, then MS 140 is notified of the updated t(PCFICH) in a semi-static manner. In one embodiment, the t(PCFICH) information may be transmitted in the System Information Broadcast (SIB) after the handover. In another example, the t(PCFICH) information may be transmitted to MS 140 in a MS-specific RRC message in a semi-static manner.

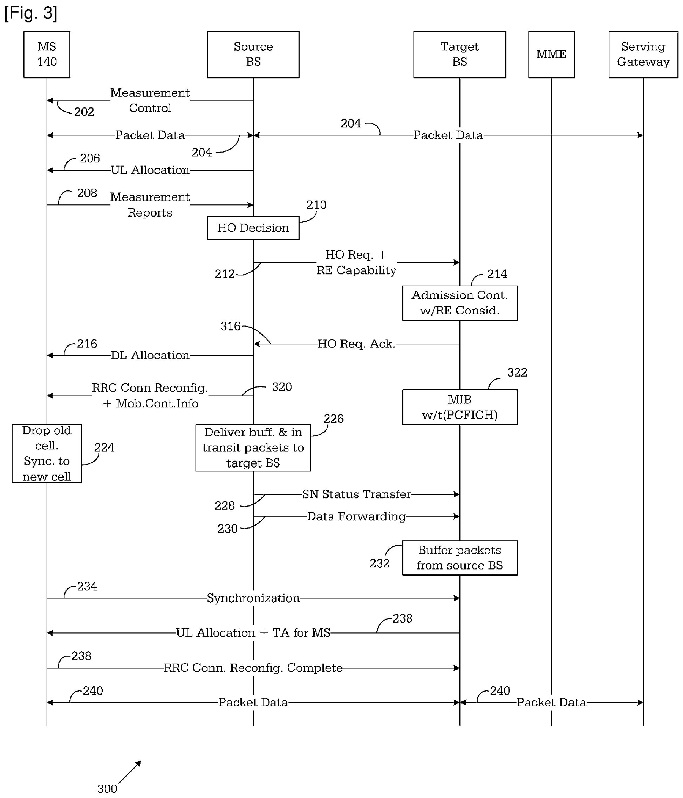

In one embodiment, if there exists any RE-capable MS 140 in RE area of micro-BS 120 that has trouble decoding the PCFICH and the PCFICH is configured semi-statically, then micro-BS 120 broadcasts PCFICH periodically in the MIB of micro-BS 120 (block 320). PCFICH is only changed when it is time to broadcast PCFICH. If RE-capable MS 140 is moving towards micro-BS 120 from another cell and if the MIB in the micro-BS is not broadcasting PCFICH, the present disclosure uses the handover procedure to signal the Target BS (i.e., micro-BS 120) to start broadcasting PCFICH in the MIB. FIGURE 3 illustrates the proposed handover procedure.

FIGURE 3 depicts message flow diagram 300, which illustrates a handover procedure that supports PCFICH communication in range expansion (RE) mode using the master information broadcasting (MIB) according to an exemplary embodiment of the disclosure. FIGURE 3 is an alternative procedure to the procedure in FIGURE 2. In this alternative embodiment, it is disclosed that the MIB of the micro-BS carries the PCFICH information of the micro-BS. In one example of MIB broadcasting, two spare bits of the MIB may be used to broadcast the PCFICH of the micro-BS.

It is noted that the procedure in FIGURE 3 is substantially similar to the procedure in FIGURE 2. Hence, most items in FIGURE 3 have the same number label as in FIGURE 2. However, Handover Request Acknowledgment message 316 does not carry the t(PCFICH) information and is therefore different than Handover Request Acknowledgment message 216. In FIGURE 3, t(PCFICH) is transmitted in the MIB in block 322. Similarly, RRC Connection Reconfiguration message 320 does not carry the t(PCFICH) information to MS 140.

When MS 140 is in the cell reselection process, MS 140 may read the system information for E-UTRAN frequencies and inter-RAT frequencies, as well as the priorities for cell reselection evaluation, as describe in REF5 above. If MS 140 has trouble decoding PCFICH in the PDCCH, the PCFICH may be broadcast in the MIB, as described above.

In one embodiment of the disclosure, in the cell reselection process in REF5, it is proposed to use two thresholds in the cell-ranking criterion to differentiate cells that do not support range expansion (RE) and cells that support RE. For example, the cell-ranking criterion $R_s$ for serving cell and $R_n$ for neighboring cells may be defined by:

$$R_s = \begin{cases} Q_{meas,s} + Q_{Hyst} + Q_{offset2} \\ Q_{meas,s} + Q_{Hyst} \end{cases}$$

if the serving cell supports range expansion otherwise

$$R_n = \begin{cases} Q_{meas,n} - Q_{offset} + Q_{offset3} \\ Q_{meas,n} - Q_{offset} \end{cases}$$

if this neighbor cell supports range expansion otherwise
where $Q_{Hyst}$ specifies the hysteresis value for ranking criteria, as defined in REF5.

Table 2

[Table 2]

| $Q_{meas}$ | RSRP measurement quantity used in cell reselections. |
|---|---|
| $Q_{offset}$ | For intra-frequency<br>Equals to Qoffset$_{s,n}$, if Qoffset$_{s,n}$ is valid, otherwise this equals to zero. |

(continued)

| | | |
|---|---|---|
| | For inter-frequency:<br>Equals to Qoffset$_{s,n}$ plus Qoffset$_{frequency}$, if Qoffset$_{s,n}$ is valid, otherwise this equals to Qoffset$_{frequency}$. | |
| Q$_{offset2}$ | For range-expansion capable UEs:<br>Equals to Q$_{REoffset}$; otherwise this equals to zero. | |

TABLE 2 defines the values of Q$_{meas}$, Q$_{offset}$, and Q$_{offset2}$. The value Q$_{REoffset}$ in TABLE 2 is broadcast in system information and is read from the serving cell. The values Q$_{offset2}$ and Q$_{offset3}$ may be different or may be the same and the existence of one may not imply that of the other. If they are the same, Q$_{offset3}$ equals Q$_{REoffset}$ for range-expansion capable mobile stations and 0 otherwise. If they are different, Q$_{offset3}$ is defined the same way as Q$_{offset2}$. For RE-capable mobile stations, Q$_{offset3}$ equals Q$_{REoffset2}$, which is also sent in system information and read from the serving cell. In addition, only one of Q$_{offset2}$ and Q$_{offset3}$ may be defined. In this case, the one defined equals Q$_{REoffset}$ for RE-capable mobile stations.

MS 140 may perform ranking of all cells that fulfill the cell selection criterion S, which is defined in Section 5.2.3.2 of REF5 above, but may exclude all CSG cells that are known by MS 140 not to be allowed. The cells may be ranked according to the R criteria specified above, deriving Q$_{meas,n}$ and Q$_{meas,s}$ and calculating the R values using averaged RSRP results. If a cell is ranked as the best cell, MS 140 may perform cell reselection to that cell. If a cell is found not to be suitable, MS 140 shall behave according to section 5.2.4.4 of REF5.

In all cases, MS 140 shall reselect the new cell, only if the following conditions are met: i) the new cell is better ranked than the serving cell during a time interval Tres-election RAT; and ii) more than 1 second has elapsed since MS 140 camped on the current serving cell.

Similar to other cell reselection parameters, the present disclosure proposes that Q$_{REoffset}$ is also broadcasted in system information and read from the serving BS. Q$_{REoffset}$ specifies the bias selecting a micro-BS that supports range expansion. Mobile station that do not support range expansion will not be able to read Q$_{REoffset}$ and omit Q$_{offset2}$ in calculating the above selection criterion, namely:

$$R_s = Q_{meas,s} + Q_{Hyst}$$

and

$$R_n = Q_{meas,n} - Q_{offset}.$$

In this case, there is no distinction between range expansion cells and normal cells. Hence, the proposed two-threshold cell reselection scheme provides automatic distinction between RE-capable cells and cells that do not support range expansion.

In one embodiment of the disclosure, in the cell reselection process, it is proposed to use two thresholds in the cell-ranking criterion to differentiate RE-capable cells and cells that do not support range expansion. For example, the cell-ranking criterion R$_s$ for serving cell and R$_n$ for neighboring cells may be defined by:

$$R_s = Q_{meas,s} + Q_{Hyst}$$

and

$$R_n = Q_{meas,n} - Q_{offset},$$

as in Release 8 of LTE.

Table 3

[Table 3]

| $Q_{meas}$ | RSRP measurement quantity used in cell reselections. | | |
|---|---|---|---|
| Qoffset | Non-RE MS | For infra-frequency:<br>Equals to Qoffset$_{s,n}$, if Qoffset$_{s,n}$ is valid, otherwise this equals to zero.<br><br>For inter-frequency:<br>Equals to Qoffset$_{s,n}$ plus Qoffset$_{frequency}$, if Qoffset$_{s,n}$ is valid, otherwise this equals to Qoffset$_{frequency}$. | |
| | RE-MS | For intra-frequency:<br>Equals to Qoffset2$_{s,n}$, if Qoffset2$_{s,n}$ is valid, otherwise equals to Qoffset$_{s,n}$, if Qoffset$_{s,n}$ is valid, otherwise this equals to zero.<br><br>For inter-frequency:<br>Equals to Qoffset2$_{s,n}$ plus Qoffset$_{frequency}$, if Qoffset2$_{s,n}$ is valid, otherwise equals to Qoffset$_{s,n}$ plus Qoffset$_{frequency}$, if Qoffset$_{s,n}$ is valid, otherwise this equals to Qoffset$_{frequency}$ | |

In this case, TABLE 3 defines the values of $Q_{meas}$, and $Q_{offset}$. In TABLE 3, non-RE MS refers to mobile stations that do not support range expansion, such as, for example Rel-8 mobile stations.

$Q_{offset2s,n}$ is a range-expansion dependent parameter. Similar to other cell reselection parameters, it is proposed that $Q_{offset2s,n}$ is also broadcast in system information and is read from the serving cell. $Q_{offset2s,n}$ specifies the bias selecting cell n that supports range expansion, compared to the serving cell. Different neighbor cells may have different biases for range expansion.

In another embodiment, it is proposed that the cell-ranking criterion $R_s$ for serving cell and $R_n$ for neighboring cells is defined by:

$$R_s = Q_{meas,s} + Q_{Hyst}$$

and

$$R_n = Q_{meas,n} - Q_{offset}.$$

Table 4

[Table 4]

| $Q_{meas}$ | RSRP measurement quantity used in cell reselections. | | |
|---|---|---|---|
| Qoffset | Non-RE MS | For intra-frequency:<br>Equals to Qoffset$_{s,n}$, if Qoffset$_{s,n}$ is valid, otherwise this equals to zero.<br><br>For inter-frequency:<br>Equals to Qoffset$_{s,n}$ plus Qoffset$_{frequency}$, if Qoffset$_{s,n}$ is valid, otherwise this equals to Qoffset$_{frequency}$ | |

(continued)

| | RE-MS | For intra-frequency:<br>Equals to Qoffset2, if Qoffset2 is valid, otherwise equals to $\text{Qoffset}_{s,n}$, if $\text{Qoffset}_{s,n}$ is valid, otherwise this equals to zero.<br><br>For inter-frequency:<br>Equals to Qoffset2 plus $\text{Qoffset}_{frequency}$, if Qoffset2 is valid; otherwise equals to $\text{Qoffset}_{s,n}$ plus $\text{Qoffset}_{frequency}$, if $\text{Qoffset}_{s,n}$ is valid, otherwise this equals to $\text{Qoffset}_{frequency}$- |

In this case, TABLE 4 defines the values of $Q_{meas}$, and $Q_{offset}$. In TABLE 4, $Q_{offset2}$ is a range-expansion dependent parameter. Similar to other cell reselection parameters, it is proposed that $Q_{offset2}$ is also broadcast in system information and is read from the serving cell. $Q_{offset2}$ specifies the offset for all cells that support range expansion, compared to the serving cell. In this example, all neighbor cells that support range expansion have the same bias.

In another embodiment of the disclosure, it is proposed that in the cell reselection process, two values of $Q_{Hyst}$ (e.g., $Q_{Hyst1}$ and $Q_{Hyst2}$, or $Q_{Hyst1}$ and $Q_{Hyst1} + Q_{HystOffset}$) are defined for the cell-ranking criterion $R_s$ for the serving cell that supports range expansion. For mobile stations that do not support range expansion, $Q_{Hyst} = Q_{Hyst1}$. For mobile stations that support range expansion, $Q_{Hyst} = Q_{Hyst2}$ or $Q_{Hyst} = Q_{Hyst1} + Q_{HystOffset}$. Both values (e.g., $Q_{Hyst1}$ and $Q_{Hyst2}$ or $Q_{Hyst1}$ and $Q_{HystOffset}$) are broadcast in system information. Mobile stations that support range expansion read $Q_{Hyst2}$ or $Q_{HystOffset}$ from the serving cell while those that do not support range expansion read $Q_{Hyst1}$, which is the same as $Q_{Hyst}$ that is already defined in REF5, from the serving cell.

In another embodiment of the disclosure, it is proposed that in the cell reselection process, two speed dependent scaling factors for Qhyst are defined for high-mobility and/or two speed dependent scaling factors for Qhyst are defined for medium-mobility states for cells that support range expansion. When two speed dependent scaling factors are defined for high-mobility states, the value "sf-High-1" for "Speed dependent ScalingFactor for $Q_{hyst}$" is defined for mobile stations that do not support range expansion. The value "sf-High-2" for "Speed dependent ScalingFactor for $Q_{hyst}$" is defined for mobile stations that support range expansion. If a high-mobility state is detected, mobile stations add the sf-High of "Speed dependent ScalingFactor for $Q_{hyst}$" to $Q_{hyst}$ if sent on system information, where sf-High = sf-High-1 for mobile stations that do not support range expansion (RE) and sf-High = sf-High-2 for mobile stations that support RE. Similarly "sf-Medium-1" and "sf-Medium-2" are defined for medium-mobility states. The values sf-High-1, sf-High-2, sf-Medium-1, and sf-Medium-2, or part of them, are sent in system information and read from the serving cell.

Although the present disclosure has been described with an exemplary embodiment, various changes and modifications may be suggested to one skilled in the art. It is intended that the present disclosure encompass such changes and modifications as fall within the scope of the appended claims.

Further aspects of the invention are provided in the following clauses.

**Clauses:**

1. A wireless network for communicating with a mobile station capable of operating in a range expansion mode, the wireless network comprising:

a macro-base station (BS) operable to communicate with the mobile station; and
a micro-base station (BS) in a coverage area associated with the macro-BS,
wherein the macro-BS transmits to the micro-BS a first control message indicating a range expansion (RE) capability of the mobile station and, in response, the micro-BS transmits to the macro-BS PCFICH information associated with the micro-BS, and
wherein the macro-BS is further operable to transmit the PCFICH information to the mobile station, wherein the mobile station uses the PCFICH information to perform a handover procedure to the micro-BS.

2. For use in a wireless network, a method of communicating with a mobile station capable of operating in a range expansion mode, the method comprising:

communicating with the mobile station from a macro-base station (BS);
transmitting from the macro-BS to a micro-base station (BS) in a coverage area associated with the macro-BS a first control message indicating a range expansion (RE) capability of the mobile station;
in response, transmitting from the micro-BS to the macro-BS PCFICH information associated with the micro-BS;
transmitting the PCFICH information from the macro-BS to the mobile station, wherein the mobile station uses the PCFICH information to perform a handover procedure to the micro-BS.

3. For use in a wireless network, a mobile station capable of operating in a range expansion mode, wherein the mobile station communicates with a macro-base station (BS) of the wireless network and receives from the macro-BS PCFICH information associated with a micro-base station (BS) in a coverage area associated with the macro-BS, and wherein the mobile station uses the PCFICH information to perform a handover procedure to the micro-BS.

4. A wireless network for communicating with a mobile station capable of operating in a range expansion mode, the wireless network comprising:

a macro-base station (BS) operable to communicate with the mobile station; and
a micro-base station (BS) in a coverage area associated with the macro-BS,
wherein the macro-BS transmits to the micro-BS a first control message indicating a range expansion (RE) capability of the mobile station and, in response, the micro-BS transmits PCFICH information associated with the micro-BS in a broadcast message to the mobile station, and
wherein the mobile station uses the PCFICH information in the broadcast message to perform a handover procedure to the micro-BS.

5. For use in a wireless network, a method of communicating with a mobile station capable of operating in a range expansion mode, the method comprising:

communicating with the mobile station from a macro-base station (BS);
transmitting from the macro-BS to a micro-base station (BS) in a coverage area associated with the macro-BS a first control message indicating a range expansion (RE) capability of the mobile station; and
in response, transmitting PCFICH information associated with the micro-BS from the micro-BS to the mobile station in a broadcast message, wherein the mobile station uses the PCFICH information in the broadcast message to perform a handover procedure to the micro-BS.

6. For use in a wireless network, a mobile station capable of operating in a range expansion mode, wherein the mobile station communicates with a macro-base station (BS) of the wireless network and receives from a micro-base station (BS) in a coverage area associated with the macro-BS a broadcast message, wherein the broadcast message includes PCFICH information associated with the micro-BS and wherein the mobile station uses the PCFICH information to perform a handover procedure to the micro-BS.

7. The wireless network as set forth in clause 1, the method as set forth in Claim 2, the mobile station as set forth in clause 3, the wireless network as set forth in clause 4, the method as set forth in clause 5, or, the mobile station as set forth in clause 6, wherein the PCFICH information includes a PCFICH value transmitted by the micro-BS.

8. The wireless network, the method, or, the mobile station as set forth in one of clauses 1 to 6, wherein the PCFICH information further includes a minimum time period during which the PCFICH value is static.

9. A wireless network for communicating with a mobile station capable of operating in a range expansion mode, the wireless network comprising:

a serving base station operable to communicate with the mobile station; and
neighboring base stations operable to communicate with the mobile station,
wherein the serving base station transmits to the mobile station in a broadcast message at least one of cell reselection parameters $Q_{REoffset}$ and $Q_{REoffset2}$ that specify a plurality of bias values associated with a plurality of the neighboring base stations that support range expansion, and wherein the mobile station uses the at least one of the cell reselection parameters $Q_{REoffset}$ and $Q_{REoffset2}$ to select one of the plurality of neighboring base stations for cell reselection.

10. The wireless network as set forth in clause 9, wherein the at least one of the cell reselection parameters $Q_{REoffset}$ and $Q_{REoffset2}$ is the same for each of the plurality of neighboring base stations.

11. For use in a wireless network, a mobile station capable of operating in a range expansion mode, wherein the mobile station communicates with a serving base station and is capable of communicating neighboring base stations, wherein the mobile station receives in a broadcast message from serving base station at least one of cell reselection parameters $Q_{REoffset}$ and $Q_{REoffset2}$ that specify a plurality of bias values associated with a plurality of the neighboring base stations that support range expansion, and wherein the mobile station uses the at least one of cell reselection parameters $Q_{REoffset}$ and $Q_{REoffset2}$ that specify a plurality of bias values to select one of the plurality of neighboring base stations for cell reselection.

12. The mobile station as set forth in clause 11, wherein the at least one cell reselection parameter is the same for each of the plurality of neighboring base stations.

13. The wireless network as set forth in clause 9 or the mobile station as set forth in clause 11, wherein a first cell reselection parameter associated with a first one of the plurality of neighboring base stations is different than a second cell reselection parameter associated with a second one of the plurality of neighboring base stations.

## Claims

1. A method for operating a user equipment in a wireless communication system, the method comprising:

   receiving, from a first base station, a measurement configuration;
   transmitting, to the first base station, a measurement report according to the measurement configuration;
   receiving, from a first base station, a RRC reconfiguration message triggering a handover to a second base station, wherein the RRC reconfiguration message includes access information required to access the second base station;
   performing a synchronization to the second base station;
   transmitting, to the second base station, a RRC reconfiguration complete message to confirm a completion of the handover;
   monitoring a physical downlink control channel, PDCCH, from the second base station based on a number of symbols used for the PDCCH of the second base station,
   wherein the RRC reconfiguration message includes the number of symbols used for the PDCCH of the second base station.

2. The method of claim 1,
   wherein the access information includes a new cell-radio network temporary identifier, C-RNTI, security algorithm identifiers of the second base station for selected security algorithms, a set of dedicated random access channel, RACH, resources.

3. A method for operating a first base station in a wireless communication system, the method comprising:

   transmitting, to a user equipment, a measurement configuration;
   receiving, from a user equipment, a measurement report according to the measurement configuration;
   determining a handover of the user equipment based on the measurement report and radio resource management, RRM, information;
   transmitting, to a second base station, a handover request message with necessary information to prepare the handover at the second base station, wherein the necessary information includes user equipment capability information;
   receiving, from the second base station, a handover request acknowledgement message including access information to be transmitted to the user equipment as a radio resource control, RRC, reconfiguration message to perform the handover;
   transmitting, to the user equipment, the RRC reconfiguration message triggering the handover to a second base station, wherein the RRC reconfiguration message includes the access information required to access the second base station,
   wherein the RRC reconfiguration message includes a number of symbols used for a physical downlink control channel, PDCCH, of the second base station.

4. The method of claim 3,
   wherein the access information includes a new cell-radio network temporary identifier, C-RNTI, security algorithm identifiers of the second base station for selected security algorithms, a set of dedicated random access channel, RACH, resources.

5. A method for operating a second base station in a wireless communication system, the method comprising:

receiving, from a first base station, a handover request message with necessary information to prepare the handover at the second base station, wherein the necessary information includes user equipment capability information;
performing an admission control based on the necessary information;
transmitting, to the first base station, a handover request acknowledgement message including access information to be transmitted to a user equipment as a radio resource control, RRC, reconfiguration message to perform the handover;
performing a synchronization from the user equipment;
receiving, from the user equipment, a RRC reconfiguration complete message to confirm a completion of the handover;
transmitting, to the user equipment, a physical downlink control channel, PDCCH, based on a number of symbols used for the PDCCH of the second base station,
wherein the RRC reconfiguration message includes the number of symbols used for the PDCCH of the second base station.

6. The method of claim 5,
wherein the access information includes a new cell-radio network temporary identifier, C-RNTI, security algorithm identifiers of the second base station for selected security algorithms, a set of dedicated random access channel, RACH, resources.

7. A user equipment in a wireless communication system, the user equipment comprising:

a transceiver; and
at least one processor operably coupled to the transceiver, and configured to:

receive, from a first base station, a measurement configuration;
transmit, to the first base station, a measurement report according to the measurement configuration;
receive, from a first base station, a RRC reconfiguration message triggering a handover to a second base station, wherein the RRC reconfiguration message includes access information required to access the second base station;
perform a synchronization to the second base station;
transmit, to the second base station, a RRC reconfiguration complete message to confirm a completion of the handover;
monitor a physical downlink control channel, PDCCH, from the second base station based on a number of symbols used for the PDCCH of the second base station,
wherein the RRC reconfiguration message includes the number of symbols used for the PDCCH of the second base station.

8. The user equipment of claim 7,
wherein the access information includes a new cell-radio network temporary identifier, C-RNTI, security algorithm identifiers of the second base station for selected security algorithms, a set of dedicated random access channel, RACH, resources.

9. A first base station in a wireless communication system, the first base station comprising:

a transceiver; and
at least one processor operably coupled to the transceiver, and configured to:

transmit, to a user equipment, a measurement configuration;
receive, from a user equipment, a measurement report according to the measurement configuration;
determine a handover of the user equipment based on the measurement report and radio resource management, RRM, information;
transmit, to a second base station, a handover request message with necessary information to prepare the handover at the second base station, wherein the necessary information includes user equipment capability information;

receive, from the second base station, a handover request acknowledgement message including access information to be transmitted to the user equipment as a radio resource control, RRC, reconfiguration message to perform the handover;

transmit, to the user equipment, the RRC reconfiguration message triggering the handover to a second base station, wherein the RRC reconfiguration message includes the access information required to access the second base station,

wherein the RRC reconfiguration message includes a number of symbols used for a physical downlink control channel, PDCCH, of the second base station.

10. The first base station of claim 9,
wherein the access information includes a new cell-radio network temporary identifier, C-RNTI, security algorithm identifiers of the second base station for selected security algorithms, a set of dedicated random access channel, RACH, resources.

11. A second base station in a wireless communication system, the second base station comprising:

a transceiver; and
at least one processor operably coupled to the transceiver, and configured to:

receive, from a first base station, a handover request message with necessary information to prepare the handover at the second base station, wherein the necessary information includes user equipment capability information;

perform an admission control based on the necessary information;

transmit, to the first base station, a handover request acknowledgement message including access information to be transmitted to a user equipment as a radio resource control, RRC, reconfiguration message to perform the handover;

perform a synchronization from the user equipment;

receive, from the user equipment, a RRC reconfiguration complete message to confirm a completion of the handover;

transmit, to the user equipment, a physical downlink control channel, PDCCH, based on a number of symbols used for the PDCCH of the second base station,

wherein the RRC reconfiguration message includes the number of symbols used for the PDCCH of the second base station.

12. The second base station of claim 11,
wherein the access information includes a new cell-radio network temporary identifier, C-RNTI, security algorithm identifiers of the second base station for selected security algorithms, a set of dedicated random access channel, RACH, resources.

[Fig. 1]

[Fig. 2]

[Fig. 3]

Europäisches
Patentamt

European
Patent Office

Office européen
des brevets

# EUROPEAN SEARCH REPORT

Application Number

EP 20 18 3859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/239539 A1 (ZHANG GUODONG [US] ET AL) 24 September 2009 (2009-09-24) * paragraphs [0003], [0021] - [0048]; figures 3, 4 * | 1-12 | INV. H04W36/04 H04W92/20 |
| A | WO 2010/005639 A2 (QUALCOMM INC [US]; BUDIANU PETRU C [US]; PALANKI RAVI [US]) 14 January 2010 (2010-01-14) * paragraphs [0005], [0007] - [0013], [0035], [0062] - [0069]; figures 1, 8, 10 * | 1-12 | |
| A | US 2009/252075 A1 (JI TINGFANG [US] ET AL) 8 October 2009 (2009-10-08) * paragraphs [0008] - [0011], [0033] - [0043], [0079], [0084]; figure 8 * | 1-12 | |
| A | US 2010/008317 A1 (BHATTAD KAPIL [US] ET AL) 14 January 2010 (2010-01-14) * paragraphs [0008], [0009], [0047], [0054], [0055] * | 1-12 | |
| A | QUALCOMM INCORPORATED: "Enabling communication in harsh interference scenarios", 3GPP DRAFT; R4-102673, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Bratislava; 20100628, 1 July 2010 (2010-07-01), XP050454839, * Section 2.2.3 "PDCCH reliability"; Section 3 "Conclusion" * | 1-12 | TECHNICAL FIELDS SEARCHED (IPC)  H04W |

The present search report has been drawn up for all claims

| Place of search | Date of completion of the search | Examiner |
|---|---|---|
| The Hague | 24 July 2020 | Stefan, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 3859

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2020

| Patent document cited in search report | Publication date | Patent family member(s) | | Publication date |
|---|---|---|---|---|
| US 2009239539 A1 | 24-09-2009 | AR | 071009 A1 | 19-05-2010 |
| | | BR | PI0906237 A2 | 22-11-2016 |
| | | CN | 101978732 A | 16-02-2011 |
| | | CN | 103716848 A | 09-04-2014 |
| | | CN | 105472673 A | 06-04-2016 |
| | | EP | 2266345 A1 | 29-12-2010 |
| | | EP | 3024275 A1 | 25-05-2016 |
| | | JP | 5757859 B2 | 05-08-2015 |
| | | JP | 5806258 B2 | 10-11-2015 |
| | | JP | 6047639 B2 | 21-12-2016 |
| | | JP | 6310041 B2 | 11-04-2018 |
| | | JP | 2011515958 A | 19-05-2011 |
| | | JP | 2013240080 A | 28-11-2013 |
| | | JP | 2016007067 A | 14-01-2016 |
| | | JP | 2017079477 A | 27-04-2017 |
| | | KR | 20100126815 A | 02-12-2010 |
| | | KR | 20120094000 A | 23-08-2012 |
| | | KR | 20150004934 A | 13-01-2015 |
| | | KR | 20150119504 A | 23-10-2015 |
| | | RU | 2010142911 A | 27-04-2012 |
| | | TW | 201010461 A | 01-03-2010 |
| | | TW | 201032625 A | 01-09-2010 |
| | | TW | 201524232 A | 16-06-2015 |
| | | US | 2009239539 A1 | 24-09-2009 |
| | | US | 2014206358 A1 | 24-07-2014 |
| | | US | 2016309380 A1 | 20-10-2016 |
| | | WO | 2009117575 A1 | 24-09-2009 |
| WO 2010005639 A2 | 14-01-2010 | BR | PI0915578 A2 | 06-02-2018 |
| | | CA | 2730027 A1 | 14-01-2010 |
| | | CN | 102090014 A | 08-06-2011 |
| | | CN | 102165832 A | 24-08-2011 |
| | | CN | 103795662 A | 14-05-2014 |
| | | EP | 2301182 A2 | 30-03-2011 |
| | | EP | 2340677 A2 | 06-07-2011 |
| | | ES | 2658603 T3 | 12-03-2018 |
| | | HU | E037951 T2 | 28-09-2018 |
| | | JP | 5296204 B2 | 25-09-2013 |
| | | JP | 5301663 B2 | 25-09-2013 |
| | | JP | 2011527853 A | 04-11-2011 |
| | | JP | 2012503346 A | 02-02-2012 |
| | | KR | 20110030680 A | 23-03-2011 |
| | | KR | 20110030681 A | 23-03-2011 |
| | | RU | 2011105019 A | 20-08-2012 |
| | | TW | 201004213 A | 16-01-2010 |
| | | TW | 201004255 A | 16-01-2010 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 20 18 3859

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2020

| Patent document cited in search report | Publication date | Patent family member(s) | | Publication date |
|---|---|---|---|---|
| | | TW | 201014308 A | 01-04-2010 |
| | | US | 2010009705 A1 | 14-01-2010 |
| | | US | 2010011269 A1 | 14-01-2010 |
| | | WO | 2010005639 A2 | 14-01-2010 |
| | | WO | 2010005640 A2 | 14-01-2010 |
| | | WO | 2010011410 A2 | 28-01-2010 |
| US 2009252075 A1 | 08-10-2009 | AU | 2009233848 A1 | 15-10-2009 |
| | | BR | PI0911166 A2 | 20-03-2018 |
| | | CA | 2720566 A1 | 15-10-2009 |
| | | CN | 102047728 A | 04-05-2011 |
| | | EP | 2292046 A1 | 09-03-2011 |
| | | HK | 1157566 A1 | 13-11-2015 |
| | | IL | 208430 A | 30-04-2015 |
| | | JP | 5996614 B2 | 21-09-2016 |
| | | JP | 6345718 B2 | 20-06-2018 |
| | | JP | 2011518507 A | 23-06-2011 |
| | | JP | 2015073294 A | 16-04-2015 |
| | | JP | 2016136748 A | 28-07-2016 |
| | | KR | 20100129792 A | 09-12-2010 |
| | | MY | 154851 A | 14-08-2015 |
| | | RU | 2010145188 A | 20-05-2012 |
| | | TW | 200952520 A | 16-12-2009 |
| | | US | 2009252075 A1 | 08-10-2009 |
| | | WO | 2009126658 A1 | 15-10-2009 |
| US 2010008317 A1 | 14-01-2010 | CN | 102090109 A | 08-06-2011 |
| | | EP | 2324667 A2 | 25-05-2011 |
| | | JP | 5175394 B2 | 03-04-2013 |
| | | JP | 2011527877 A | 04-11-2011 |
| | | KR | 20110030683 A | 23-03-2011 |
| | | TW | 201008206 A | 16-02-2010 |
| | | US | 2010008317 A1 | 14-01-2010 |
| | | US | 2013094427 A1 | 18-04-2013 |
| | | WO | 2010006289 A2 | 14-01-2010 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **QUALCOMM EUROPE.** LTE-Advanced System Requirements. *REF1 - REV-080052*
- **QUALCOMM EUROPE.** New Interference Scenarios in LTE-Advanced. *REF2 - Document No. R1-082556*
- **ERICSSON ; MOTOROLA ; NOKIA ; NOKIA SIEMENS NETWORKS ; QUALCOMM EUROPE ; SAMSUNG.** Text Proposal For Evaluation Methodology. *REF3 - Document No. R1-083807*
- **NTT DOCOMO.** Investigation On CRS Interference To Downlink Control Channel. *REF4 - Document No. R1-104036*
- Evolved Universal Terrestrial Radio Access (E-UTRA); User Equipment (MS) Procedures In Idle Mode. *REF5 - 3GPP Technical Specification No. 36.304*